# EUROPEAN PATENT SPECIFICATION

(11) **EP 2 689 967 B1**
(45) Date of publication and mention of the grant of the patent: **19.08.2015**
(21) Application number: 12177956.5
(22) Date of filing: 26.07.2012
(51) Int. Cl.: B60R 9/055

(54) **Illumination device for vehicle carrier box and vehicle carrier box**
Beleuchtungsvorrichtung für einen Fahrzeugtragkasten und Fahrzeugtragkasten
Dispositif d'éclairage pour boîte de support de véhicule et boîte de support de véhicule

(43) Date of publication of application: 29.01.2014
(73) Proprietor: Thule Sweden AB, 330 33 Hillerstorp (SE)
(72) Inventor: Fritsche, Günther, DE-92353 Postbauer (DE); Nilvius, Anders, SE-331 35 Värnamo (SE)
(74) Representative: Valea AB

(56) References cited:
- WO-A1-2010/082898
- DE-U1-202010 012 544
- US-A1- 2007 194 185
- US-A1- 2011 084 102

## Description

### TECHNICAL FIELD

The present invention relates to a vehicle carrier box..

### BACKGROUND

Vehicle carrier boxes are utilized for transporting a load on the roof of a vehicle. The load transported inside the carrier box is protected from the ambient environment, such as wind, snow and rain, and also from dust and dirt.

EP 646690 discloses a roof box for a vehicle. The roof box is provided with a support for holding a lid of the roof box. The support comprises a first and a second arm connected to each other by means of a pivot bearing. A pressure spring is provided between the two arms. Forces for holding the lid closed and forces for holding the lid open may be precisely controlled by means of the support.

Loading and unloading of vehicle carrier boxes is often performed under bad lighting conditions, for instance during dark or darkish hours, or inside a garage. Moreover, the lid of a carrier box, in its open position, may block outside light from the inside of the carrier box.

US 20070205240, see preamble of claim 1 of the present invention, discloses a vehicle top carrier which is provided with an illumination device removably attached to the inside of the vehicle top box. The illumination device includes a mounting bracket, a slidable mount interface, and a mountable light. The mounting bracket is configured for attachment to the interior of the vehicle top carrier by screwing, bolting, or double-sided adhesive tape. The mount interface is slid onto the bracket and is shaped to receive and to support the mountable light. The mountable light includes a switch which may be manually or automatically operated.

There exists a need for an uncomplicated and versatile arrangement for lighting an inside of a vehicle carrier box.

### SUMMARY

It is an object of the present invention to provide an arrangement for lighting an inside of a vehicle carrier box which is easy to use in the vehicle carrier box.

According to an aspect of the invention, the object is achieved by the features of claim 1.

Since the first housing of the illumination device is adapted to be engaged with the support device, no additional means have to be arranged on the vehicle carrier box in order to attach the illumination device thereto. As a result, the above mentioned object is achieved.

The vehicle carrier box may be utilized for transporting a load on the roof of a vehicle. In the following the vehicle carrier box may also be referred to as the box. A load may be placed inside the box. The box may be open for loading and unload and closed to protect its inside and any contents inside the box. Typically, the box is closed when the box is mounted on the roof of a vehicle while the vehicle is moving. The lid of the box may be attached to the bottom portion of the box by means of at least one hinge. The lid may be locked to the bottom portion. The support device may be arranged inside the vehicle carrier box. At a first end portion of the support device, the support device may be pivotably attached to the lid, and at a second end portion of the support device, the support device may be pivotably attached to the bottom portion. The illumination device may be engaged with the support device by means of gluing, welding, screwing with one or more bolts, a mechanical interface, or other means. The light source may comprise at least one light bulb, halogen lamp, light emitting diode (LED), or any other suitable source of light sufficient to light up an inside of a vehicle carrier box.

According to embodiments, the first housing may comprise an interface adapted to engage with the support device. In this manner there is no need for any separate mounting arrangement for the illumination device on the vehicle carrier box. A standard interface may thus be provided in an illumination device for vehicle carrier boxes comprising a support device.

According to embodiments, the first housing may form a first recess. The first recess may form the interface. Walls of the first recess may be adapted to at least partially enclose a portion of the support device. In this manner the first housing may be passed onto a portion of the support device and may be easily arranged inside the box.

According to embodiments, the first housing may form a first recess. The first recess may form the interface. Walls of the first recess may be adapted to at least partially enclose an end portion of the support device. In this manner the first housing may be passed onto the end portion of the support device and may be easily arranged inside the box.

According to embodiments, a wall portion of the walls of the first recess may be arranged to interlock with a part of the support device. In this manner it may be ensured that the illumination device remains attached to the support device during opening and closing of the lid of the box.

According to embodiments, the illumination device may be adapted for use with a support device comprising a first arm and a second arm. The first arm may be pivotably connected to the lid of the vehicle carrier box, and the second arm may be pivotably connected to the bottom portion of the vehicle carrier box. The interface may be adapted to engage with the first arm, or the second arm.

The walls of the first recess may be adapted to at least partially enclose a first end portion of the first arm, or a second end portion of the second arm. The wall portion of the walls of the first recess may be arranged to interlock with a portion of the first arm, or a portion of the second arm.

According to embodiments, the interface may be adapted to engage with the first arm. In this manner the illumination device may be indirectly associated with the lid of the vehicle carrier box.

According to embodiments, the illumination device may comprise a switch for actuating the light source. The switch may be arranged to be actuated by the second arm, or an actuation part associated with the second arm, when the support device is folded with the first arm positioned adjacent to the second arm. In this manner an automatic switching on and off of the illumination device may be achieved as the first and second arms are unfolded and folded in relation to each other. Furthermore, the switch being actuated by the second arm or an actuation part associated with the second arm provides an actuation of the illumination device independent of the design of a relevant vehicle carrier box. Instead, a support device dependent illumination device is achieved, which entails that the illumination device may be utilized in any vehicle carrier box with a support device comprising a first arm and a second arm.

The light source may be connected to a battery, such as a rechargeable battery. The switch may be arranged in an electric circuit comprising the light source and the battery.

According to embodiments, the illumination device may comprise a second housing arranged to engage with the second arm, the second housing being separate from the first housing and comprising the actuation part. In this manner the actuation part easily may be attached to the actuation part.

According to embodiments, the switch may comprise a reed switch and the actuation part may comprise a magnet. In this manner the illumination device may be switched on and off by the reed switch. Mechanical wear of the illumination device, or the vehicle carrier box, associated with engaging the switch may thus be avoided.

According to embodiments, the light source may be shut off when the switch is actuated by the actuation part. In this manner the illumination device may light up the vehicle carrier box as long as the box is open and energy may be saved when the switch is actuated as the box is closed.

According to embodiments, the first housing and the second housing may be able to engage with each other when detached from the first and second arms of the support device. In this manner the first housing and the second housing, forming separate parts, may temporarily be attached to each other. Keeping track of the two housings is thus facilitated. Furthermore, the illumination device may be utilized as a flashlight in other situations than those associated with a vehicle carrier box. Also, since the actuation part is connected to the first housing the switch may be engaged or disengaged by the actuation part.

According to a further aspect of the invention there is provided a vehicle carrier box comprising a vehicle mountable bottom portion, a lid, and a support device. The support device is arranged between the lid of the vehicle carrier box and the bottom portion of the vehicle carrier box. An illumination device according to any one of the aspects and embodiments discussed herein is attached to the support device.

According to embodiments, the support device may comprise a first arm and a second arm, the first arm may be pivotably connected to the lid of the vehicle carrier box, and the second arm may be pivotably connected to the bottom portion of the vehicle carrier box.

The first arm and the second arm may be directly or indirectly pivotably connected to each other.

According to embodiments, the support device may comprise a pressure spring attached to the first arm and the second arm. The support device may be arranged for holding the lid of the vehicle carrier box in a closed position, or in an open position, in relation to the bottom portion of the vehicle carrier box.

According to a further aspect of the invention, there is provided a vehicle carrier box comprising a vehicle mountable bottom portion and a lid. An illumination device is arranged inside the vehicle carrier box, wherein the illumination device comprises a light source, a reed switch, and a magnet for actuating the reed switch.

Thus, there is provided an illumination device for use with a vehicle carrier box. The illumination device may comprise a supporting housing. The light source and the reed switch may be arranged in the supporting housing.

The lid may be opened in relation to the bottom portion. The supporting housing may be directly or indirectly attached to the lid, or the supporting housing may form at least part of the lid. The magnet may be directly or indirectly attached to the bottom portion. Accordingly, the magnet may be separate from the supporting housing in the sense that the supporting housing is movable in relation to the magnet. In this manner the illumination device may be switched on by opening the lid and switched off by closing the lid.

According to embodiments, the light source may be connected to a battery, such as a rechargeable battery. The reed switch may be arranged in an electric circuit comprising the light source, and the battery. Mechanical wear of the illumination device, or the vehicle carrier box, associated with engaging a switch of the illumination device may thus be avoided.

According to embodiments, the light source may be shut off when the switch is actuated by the magnet. In this manner the illumination device may light up the vehicle carrier box as long as the box is open and energy may be saved when the switch is actuated as the box is closed. Thus, an automatic illumination device for the inside of the box is achieved.

Further features of, and advantages with, the present invention will become apparent when studying the appended claims and the following detailed description. Those skilled in the art will realize that different features of the present invention may be combined to create embodiments other than those described in the following, without departing from the scope of the present invention, as defined by the appended claims.

### BRIEF DESCRIPTION OF THE DRAWINGS

The various aspects of the invention, including its particular features and advantages, will be readily understood from the following detailed description and the accompanying drawings, in which:
Fig. 1 illustrates a cross section through a vehicle carrier box according to embodiments,
Figs. 2 and 3 illustrate an illumination device for a vehicle carrier box according to embodiments attached to a support device, and
Fig. 4 illustrates an illumination device detached from a support device.

### DETAILED DESCRIPTION

The present invention will now be described more fully with reference to the accompanying drawings, in which example embodiments are shown. However, this invention should not be construed as limited to the embodiments set forth herein. Disclosed features of example embodiments may be combined as readily understood by one of ordinary skill in the art to which this invention belongs. Like numbers refer to like elements throughout. Well-known functions or constructions will not necessarily be described in detail for brevity and/or clarity.

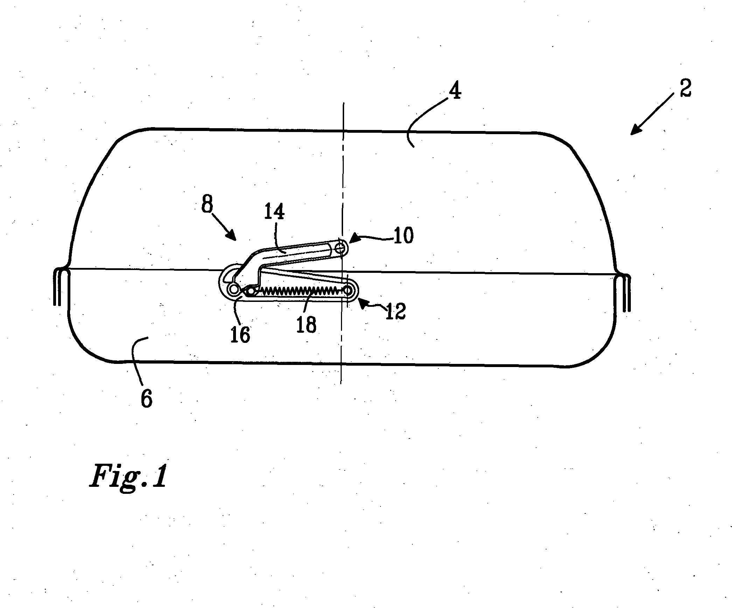

**Fig. 1** illustrates a cross section through a vehicle carrier box **2** according to embodiments. The vehicle carrier box 2 is utilized for transporting a load on the roof of a vehicle. The box 2 comprises a lid **4** and a bottom portion **6.** The bottom portion 6 may be attached to the roof of the vehicle, e.g. to one or more rails arranged on the roof. The lid 4 is opened for loading and unloading the box 2. The lid 4 of the box 2 is attached to the bottom portion 6 of the box 2 by means of a support device **8.** The support device 8 is arranged inside the box 2. A first end portion **10** of the support device 8 is pivotably attached to the lid **4.** A second end portion **12** of the support device 8 is pivotably attached to the bottom portion 6.

The support device 8 comprises a first arm **14** and a second arm **16.** The first arm 14 comprises the first end portion 10 and thus, is pivotably connected to the lid 4 of the box 2. The second arm 16 comprises the second end portion 12 and thus, is pivotably connected to the bottom portion 6 of the box 2. The support device 8 may be a support as disclosed in EP 646690. Accordingly, the first arm 12 may be pivotably connected directly to the second arm 16, and a pressure spring **18** may be provided between the first arm 14 and the second arm 16.

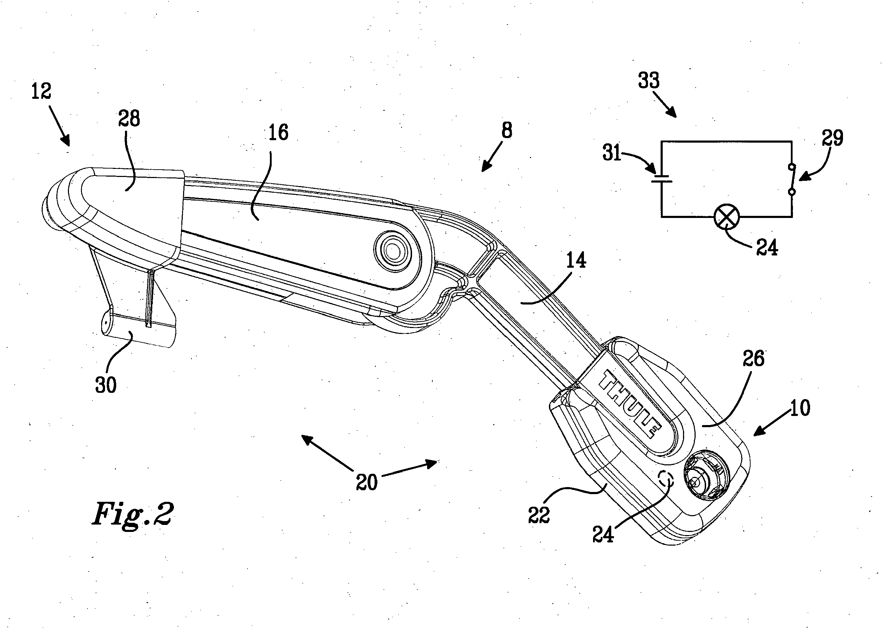

**Fig. 2** illustrates an illumination device **20** for a vehicle carrier box according to embodiments. The illumination device 20 is illustrated engaged with a support device 8 of a vehicle carrier box. The support device 8 is illustrated in an unfolded position, in which a lid of the vehicle carrier box is in an open position.

The illumination device 20 comprises a first housing **22** and a light source **24** (indicated with a broken line) arranged inside the first housing 22. The first housing 22 comprises an interface adapted to engage with a first end portion 10 of a first arm 14 of the support device 8. The first housing 22 comprises a translucent portion **26**, through which the light source 24 may radiate light.

The illumination device 20 further comprises a second housing **28** arranged to engage with a second end portion 12 of a second arm 16 of the support device 8. Thus, the second housing 28 is separate from the first housing 22. The second housing 28 comprises an actuation part **30**. The actuation part 30 is arranged to actuate a switch of the illumination device 20.

According to embodiments, the switch may comprise a reed switch **29** and the actuation part 30 may comprise a magnet. A battery **31** provides energy to the light source 24. The reed switch 29 is arranged in an electric circuit **33** comprising the light source 24, and the battery 31, as show on the diagram inserted in Fig. 2. In practice the electric circuit 33 is arranged inside the first housing 22.

In the illustrated unfolded position of the support device 8, the reed switch 29 is not actuated by the magnet because the magnet is positioned at a comparatively far distance from the reed switch 29. The reed switch 29 is not actuated and thus, closed in this position of the magnet and the illumination device 20 is switched on.

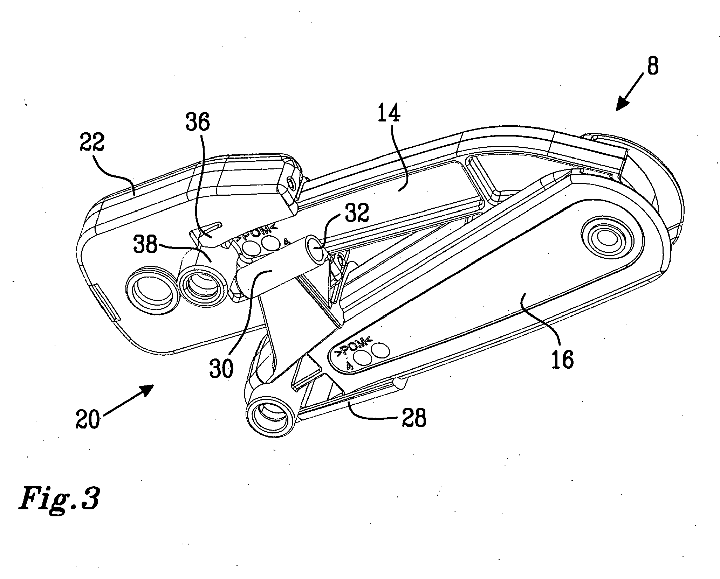

**Fig. 3** illustrates the illumination device 20 of Fig. 2 with the support device 8 in a folded position, in which the lid of the vehicle carrier box is in a closed position. In the folded position, the first arm 14 is positioned adjacent to the second arm 16.

In this position the first housing 22 is arranged adjacent to the second housing 28 and the switch is actuated by the actuation part 30. More precisely, in this position the magnet **32** of the actuation part 30 is positioned close to the reed switch 29. The magnet 32 is positioned in relation to the reed switch such that the magnetic field of the magnet 32 actuates the reed switch. The reed switch is actuated by the magnet 32 to open the reed switch. Thus, the illumination device 20 is switched off. Since the support device 8 is in the folded position when the vehicle carrier box is closed, energy may be saved when light is not required inside the box.

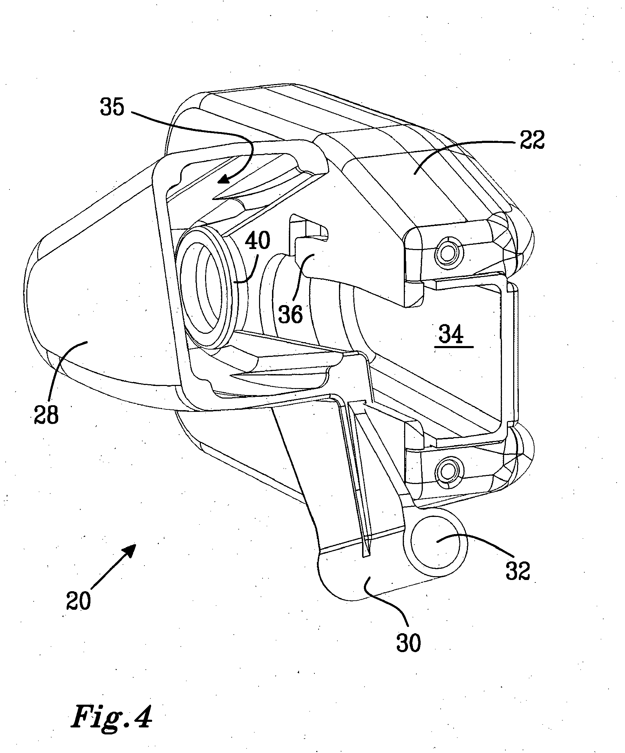

**Fig. 4** illustrates the illumination device 20 of Figs. 2 and 3 detached from the support device 8. The first housing 22 forms a first recess **34.** The first recess 34 forms an interface adapted to engage with the support device, more precisely at a first end portion of a first arm of the support device. Walls of the first recess 34 are adapted to at least partially enclose the first end portion of the support device. The second housing 28 forms a second recess **35**, which second recess 35 forms an interface for engaging with the support device, more precisely at a second end portion of a second arm of the support device.

A wall portion **36** of the walls of the first recess 34 may be arranged to interlock with a part of the first arm 14 of the support device. As illustrated in Fig. 3, the wall portion 36 interlocks with a protrusion **38** at the first end portion of the first arm 14. Similarly, to the first housing 22, a wall portion of the second recess 35 may interlock with a protrusion of the second arm 16, as shown in Fig. 3.

In Fig. 4 the first housing 22 and the second housing 28 are illustrated engaged with each other. The separate first and second housings 22, 28 are releasably attached to each other by means of a wall portion of the second recess 35 engaging with a protrusion **40** of the first housing 22. Furthermore, the first and second housings 22, 28 may be rotated in relation to each other about and axis extending though the protrusion 40. Accordingly, the actuation part 30 and the magnet 32 may be rotated to a position close to the first housing 22 such that the magnetic field of the magnet 32 will actuate the reed switch. In Fig. 4 the actuation part 30 is illustrated in the position wherein the reed switch is actuated and the illumination device 20 is switched off. Conversely, the actuation part 30 and the magnet 32 may be rotated away from the first housing 22 such that the magnetic field of the magnet 32 will not actuate the reed switch and the illumination device 20 is switched on. Thus, the reed switch may be engaged and disengaged to switch off and on the illumination device 20 by rotating the second housing 28.

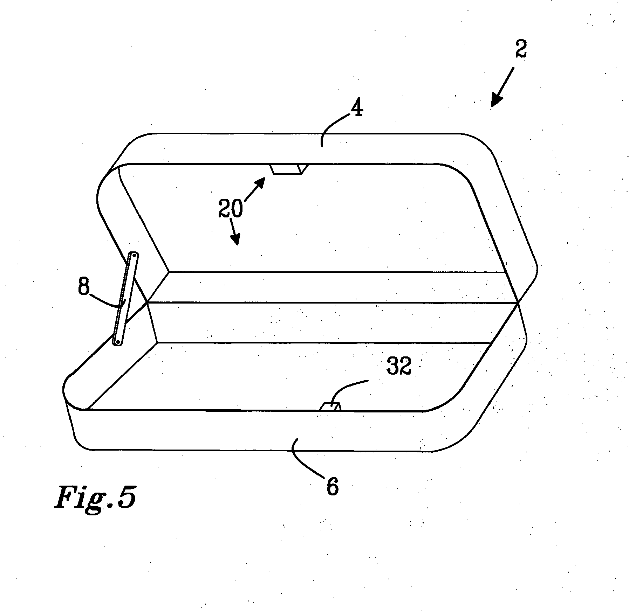

**Fig. 5** illustrates a vehicle carrier box 2 according to embodiments. The vehicle carrier box 2 comprises a vehicle mountable bottom portion 6 and a lid 4. The box 2 may further comprise a support device 8. The support device 8 is arranged between the lid 4 and the bottom portion 6. An illumination device 20 is arranged inside the vehicle carrier box 2. The illumination device 20 comprises a light source, a reed switch, and a magnet 32 for actuating the reed switch, similarly to illumination device 20 disclosed in previous embodiments.

The lid 4 of the box 2 forms part of a supporting housing of the illumination device 20. The magnet 32 is arranged in the bottom portion 6 of the box 2.

The lid 4 of the vehicle carrier box 2 may comprise the electronic circuit 33 illustrated in the diagram of Fig. 2, i.e. the light source 24, the battery 31 and the reed switch 29.

The light source is shut off when the reed switch is actuated by the magnet. In this manner the illumination device may light up the vehicle carrier box as long as the box is open and energy may be saved when the switch is actuated as the box is closed. Example embodiments described above may be combined as understood by a person skilled in the art. Although the invention has been described with reference to example embodiments, many different alterations, modifications and the like will become apparent for those skilled in the art. For instance, a switch being mechanically actuated by abutting against the second arm or the actuation part may be provided instead of the reed switch and the magnet. Also, the support device may be differently constructed than illustrated in Figs. 1-3. The support device may for instance comprise a gas spring or other type of cylinder, the first housing of the illumination device being attached to one end portion of the spring/cylinder. A further alternative may be that the support device comprises a hinge arranged between the lid and the bottom portion. The switch may comprise an angle measurement sensor, which sensor is arranged to actuate the light source upon sensing a predetermined angle or change of angle between the lid and the bottom portion of the box, or between arms of the support device. Therefore, it is to be understood that the foregoing is illustrative of various example embodiments and that the invention is defined only the appended claims.

As used herein, the term "comprising" or "comprises" is open-ended, and includes one or more stated features but does not preclude the presence or addition of one or more other features or groups thereof.

## Claims

1. A vehicle carrier box (2) comprising a vehicle mountable bottom portion (6), a lid (4), and a support device (8), the support device (8) being arranged between the lid (4) of the vehicle carrier box (2) and the bottom portion (6) of the vehicle carrier box (2),
an illumination device (20) comprising a first housing (22) and a light source (24) arranged in said first housing (22),
**characterized in that** the illumination device (20)
is attached to said support device (8) so that said first housing (22) is adapted to be engaged with the support device (8).

2. The vehicle carrier box (2) according to claim 1, wherein the first housing (22) comprises an interface adapted to engage with the support device (8)

3. The vehicle carrier box (2) according to claim 1 or 2, wherein the first housing (22) forms a first recess (34), the first recess (34) forming the interface, and wherein walls of the first recess (34) are adapted to at least partially enclose a portion (10, 12) of the support device (8).

4. The vehicle carrier box (2) according to claim 2 or 3, wherein the first housing (22) forms a first recess (34), the first recess (34) forming the interface, and wherein walls of the first recess (34) are adapted to at least partially enclose an end portion (10, 12) of the support device (8).

5. The vehicle carrier box (2) according to claim 3 or 4, wherein a wall portion of the walls of the first recess (34) is arranged to interlock with a part of the support device (8).

6. The vehicle carrier box (2) according to any one of the preceding claims, wherein the illumination device (20) comprises a first arm (14) and a second arm (16), the first arm (14) being pivotably connected to the lid of the vehicle carrier box (2), and the second arm (16) being pivotably connected to the bottom portion of the vehicle carrier box (2), wherein the interface is adapted to engage with the first arm (14), or the second arm (16).

7. The vehicle carrier box (2) according to claim 6, wherein the interface is adapted to engage with the first arm (14).

8. The vehicle carrier box (2) according to claim 6 or 7, comprising a switch (29) for actuating the light source (24), the switch (29) being arranged to be actuated by the second arm (16), or an actuation part (30) associated with the second arm (16), when the support device (8) is folded with the first arm (14) positioned adjacent to the second arm (16).

9. The vehicle carrier box (2) according to claim 8, comprising a second housing (28) arranged to engage with the second arm (16), the second housing (28) being separate from the first housing (22) and comprising the actuation part (30).

10. The vehicle carrier box (2) according to claim 8 or 9, wherein the switch comprises a reed switch (29) and the actuation part (30) comprises a magnet (32).

11. The vehicle carrier box (2) according to any one of claims 8-10, wherein the light source (24) is shut off when the switch (29) is actuated by the actuation part (30).

12. The vehicle carrier box (2) according to any one of claims 9-11, wherein the first housing (22) and the second housing are able to engage with each other when detached from the first and second arms (14, 16) of the support device (8).

13. The vehicle carrier box (2) according to claim 1, wherein the support device (8) comprises a first arm (14) and a second arm (16), the first arm (14) being pivotably connected to the lid (4) of the vehicle carrier box (2), and the second arm (16) being pivotably connected to the bottom portion (6) of the wehicie carrier box (2).

14. The vehicle carrier box (2) according to claim 13, wherein the support device (8) comprises a pressure spring (18) attached to the first arm (14) and the second arm (16), and wherein the support device (8) is arranged for holding the lid (4) of the vehicle carrier box (2) in a closed position, or in an open position, in relation to the bottom portion (6) of the vehicle carrier box (2).

## Patentansprüche

1. Fahrzeugtragkasten (2), umfassend einen am Fahrzeug befestigbaren Bodenabschnitt (6), einen Deckel (4) und eine Haltevorrichtung (8), wobei die Haltevorrichtung (8) zwischen dem Deckel (4) des Fahrzeugtragkastens (2) und dem Bodenabschnitt (6) des Fahrzeugtragkastens (2) angeordnet ist, eine Beleuchtungsvorrichtung (20), die ein erstes Gehäuse (22) und eine in dem ersten Gehäuse (22) angeordnete Lichtquelle (24) umfasst,
**dadurch gekennzeichnet, dass** die Beleuchtungsvorrichtung (20) an der Haltevorrichtung (8) angebracht ist, sodass das erste Gehäuse (22) so ausgelegt ist, dass es mit der Haltevorrichtung (8) in Eingriff gebracht wird.

2. Fahrzeugtragkasten (2) nach Anspruch 1, wobei das erste Gehäuse (22) einen Verbindungsbereich umfasst, der so ausgelegt ist, dass er mit der Haltevorrichtung (8) in Eingriff gelangt.

3. Fahrzeugtragkasten (2) nach Anspruch 1 oder 2, wobei das erste Gehäuse (22) eine erste Vertiefung (34) bildet, wobei die erste Vertiefung (34) den Verbindungsbereich bildet, und wobei Wände der ersten Vertiefung (34) so ausgelegt sind, dass sie zumindest teilweise einen Abschnitt (10, 12) der Haltevorrichtung (8) umgeben.

4. Fahrzeugtragkasten (2) nach Anspruch 2 oder 3, wobei das erste Gehäuse (22) eine erste Vertiefung (34) bildet, wobei die erste Vertiefung (34) den Verbindungsbereich bildet, und wobei Wände der ersten Vertiefung (34) so ausgelegt sind, dass sie zumindest teilweise einen Endabschnitt (10, 12) der Haltevorrichtung (8) umgeben.

5. Fahrzeugtragkasten (2) nach Anspruch 3 oder 4, wobei ein Wandabschnitt der Wände der ersten Vertiefung (34) so angeordnet ist, dass er sich mit einem Teil der Haltevorrichtung (8) verriegelt.

6. Fahrzeugtragkasten (2) nach einem der vorhergehenden Ansprüche, wobei die Beleuchtungsvorrichtung (20) einen ersten Arm (14) und einen zweiten Arm (16) umfasst, wobei der erste Arm (14) schwenkbar mit dem Deckel des Fahrzeugtragkastens (2) verbunden ist, und der zweite Arm (16) schwenkbar mit dem Bodenabschnitt des Fahrzeugstragkastens (2) verbunden ist, wobei der Verbindungsbereich so ausgelegt ist, dass er mit dem ersten Arm (14) oder dem zweiten Arm (16) in Eingriff gelangt.

7. Fahrzeugtragkasten (2) nach Anspruch 6, wobei der Verbindungsbereich so ausgelegt ist, dass er mit dem ersten Arm (14) in Eingriff gelangt.

8. Fahrzeugtragkasten (2) nach Anspruch 6 oder 7, der einen Schalter (29) zum Betätigen der Lichtquelle (24) umfasst, wobei der Schalter (29) so angeordnet ist, dass er von dem zweiten Arm (16) oder einem Betätigungsteil (30), der dem zweiten Arm (16) zugehörig ist, betätigt wird, wenn die Haltevorrichtung (8) so zusammengeklappt ist, dass der erste Arm (14) angrenzend an den zweiten Arm (16) platziert ist.

9. Fahrzeugtragkasten (2) nach Anspruch 8, der ein zweites Gehäuse (28) umfasst, das so angeordnet ist, dass es mit dem zweiten Arm (16) in Eingriff gelangt, wobei sich das zweite Gehäuse (28) getrennt vom ersten Gehäuse (22) befindet und den Betätigungsteil (30) umfasst.

10. Fahrzeugtragkasten (2) nach Anspruch 8 oder 9, wobei der Schalter einen Reedschalter (28) umfasst und der Betätigungsteil (30) einen Magneten (32) umfasst.

11. Fahrzeugtragkasten (2) nach einem der Ansprüche 8 bis 10, wobei die Lichtquelle (24) ausgeschaltet wird, wenn der Schalter (29) von dem Betätigungsteil (30) betätigt wird.

12. Fahrzeugtragkasten (2) nach einem der Ansprüche 9 bis 11, wobei das erste Gehäuse (22) und das zweite Gehäuse in der Lage sind, miteinander in Eingriff zu gelangen, wenn sie von dem ersten und zweiten Arm (14, 16) der Haltevorrichtung (8) abgenommen sind.

13. Fahrzeugtragkasten (2) nach Anspruch 1, wobei die Haltevorrichtung (8) einen ersten Arm (14) und einen zweiten Arm (16) umfasst, wobei der erste Arm (14) schwenkbar mit dem Deckel (4) des Fahrzeugtragkastens (2) verbunden ist, und der zweite Arm (16) schwenkbar mit dem Bodenabschnitt (6) des Fahrzeugstragkastens (2) verbunden ist

14. Fahrzeugtragkasten (2) nach Anspruch 13, wobei die Haltevorrichtung (8) eine Druckfeder (18) umfasst, die an dem ersten Arm (14) und dem zweiten Arm (16) angebracht ist, und wobei die Haltevorrichtung (8) so angeordnet ist, dass sie den Deckel (4) des Fahrzeugtragkastens (2) in einer geschlossenen Stellung oder in einer offenen Stellung bezogen auf den Bodenabschnitt (6) des Fahrzeugtragkastens (2) hält.

## Revendications

1. Coffre de toit de véhicule (2) comprenant une partie inférieure (6) pouvant être montée sur un véhicule, un couvercle (4), et un dispositif de support (8), le dispositif de support (8) étant agencé entre le couvercle (4) du coffre de toit de véhicule (2) et la partie inférieure (6) du coffre de toit de véhicule (2), un dispositif d'éclairage (20) comprenant un premier boîtier (22) et une source lumineuse (24) agencée dans ledit premier boîtier (22),
**caractérisé en ce que** le dispositif d'éclairage (20) est fixé audit dispositif de support (8) de sorte que ledit premier boîtier (22) est adapté pour être en prise avec le dispositif de support (8).

2. Coffre de toit de véhicule (2) selon la revendication 1, dans lequel le premier boîtier (22) comprend une interface adaptée pour venir en prise avec le dispositif de support (8).

3. Coffre de toit de véhicule (2) selon la revendication 1 ou 2, dans lequel le premier boîtier (22) forme un premier évidement (34), le premier évidement (34) formant l'interface, et dans lequel des parois du premier évidement (34) sont adaptées pour enfermer au moins partiellement une partie (10, 12) du dispositif de support (8).

4. Coffre de toit de véhicule (2) selon la revendication 2 ou 3, dans lequel le premier boîtier (22) forme un premier évidement (34), le premier évidement (34) formant l'interface, et dans lequel des parois du premier évidement (34) sont adaptées pour enfermer au moins partiellement une partie d'extrémité (10, 12) du dispositif de support (8).

5. Coffre de toit de véhicule (2) selon la revendication 3 ou 4, dans lequel une partie de paroi des parois du premier évidement (34) est agencée pour s'emboîter avec une partie du dispositif de support (8).

6. Coffre de toit de véhicule (2) selon l'une quelconque des revendications précédentes, dans lequel le dispositif d'éclairage (20) comprend un premier bras (14) et un second bras (16), le premier bras (14) étant relié pivotant au couvercle du coffre de toit de véhicule (2), et le second bras (16) étant relié pivotant à la partie inférieure du coffre de toit de véhicule (2), dans lequel l'interface est adaptée pour venir en prise avec le premier bras (14), ou le second bras (16).

7. Coffre de toit de véhicule (2) selon la revendication 6, dans lequel l'interface est adaptée pour venir en prise avec le premier bras (14).

8. Coffre de toit de véhicule (2) selon la revendication 6 ou 7, comprenant un interrupteur (29) destiné à actionner la source lumineuse (24), l'interrupteur (29) étant agencé pour être actionné par le second bras (16), ou une pièce d'actionnement (30) associée au second bras (16), quand le dispositif de support (8) est plié avec le premier bras (14) positionné adjacent au second bras (16).

9. Coffre de toit de véhicule (2) selon la revendication 8, comprenant un second boîtier (28) agencé pour venir en prise avec le second bras (16), le second boîtier (28) étant séparé du premier boîtier (22) et comprenant la pièce d'actionnement (30).

10. Coffre de toit de véhicule (2) selon la revendication 8 ou 9, dans lequel l'interrupteur comprend un interrupteur à lames souples (29) et la pièce d'actionnement (30) comprend un aimant (32).

11. Coffre de toit de véhicule (2) selon l'une quelconque des revendications 8 à 10, dans lequel la source lumineuse (24) est éteinte quand l'interrupteur (29) est actionné par la pièce d'actionnement (30).

12. Coffre de toit de véhicule (2) selon l'une quelconque des revendications 9 à 11, dans lequel le premier boîtier (22) et le second boîtier sont capables de venir en prise l'un avec l'autre quand ils sont détachés des premier et second bras (14, 16) du dispositif de support (8).

13. Coffre de toit de véhicule (2) selon la revendication 1, dans lequel le dispositif de support (8) comprend un premier bras (14) et un second bras (16), le premier bras (14) étant relié pivotant au couvercle (4) du coffre de toit de véhicule (2), et le second bras (16) étant relié pivotant à la partie inférieure (6) du coffre de toit de véhicule (2).

14. Coffre de toit de véhicule (2) selon la revendication 13, dans lequel le dispositif de support (8) comprend un ressort de compression (18) fixé au premier bras (14) et au second bras (16), et dans lequel le dispositif de support (8) est agencé pour maintenir le couvercle (4) du coffre de toit de véhicule (2) dans une position fermée, ou dans une position ouverte, par rapport à la partie inférieure (6) du coffre de toit de véhicule (2).
